## Europäisches Patentamt
## European Patent Office
## Office européen des brevets

(19)

(11) Publication number: **0 013 961**
**B1**

(12)

# EUROPEAN PATENT SPECIFICATION

(45) Date of publication of patent specification: **09.03.83**

(51) Int. Cl.³: **B 01 D 47/16** //B01D53/18, B01D47/12

(21) Application number: **80100274.2**

(22) Date of filing: **21.01.80**

(54) A method and an apparatus for washing gases and/or recovering heat therefrom.

(30) Priority: **23.01.79 SE 7900605**

(43) Date of publication of application:
**06.08.80 Bulletin 80/16**

(45) Publication of the grant of the patent:
**09.03.83 Bulletin 83/10**

(84) Designated Contracting States:
**AT BE CH DE FR GB IT NL**

(56) References cited:
**DE - A - 1 444 349**
**DE - B - 1 078 730**
**DE - C - 288 530**
**FR - A - 2 153 387**
**GB - A - 11 452**
**GB - A - 325 300**
**GB - A - 757 149**
**US - A - 2 122 334**

(73) Proprietor: **LEITEX STOCKHOLMS-TVÄTT AKTIEBOLAG**
**Huvudsta Strand**
**S-171 56 Solna (SE)**

(72) Inventor: **Holmquist, Börje Gustav Adolf**
**Huvudsta Strand**
**S-171 56 Solna (SE)**

(74) Representative: **Schmidt-Evers, Jürgen et al, Patentanwälte Dipl.-Ing.H.Mitscherlich Dipl.-Ing.K.Gunschmann Dr.rer.nat.W.Körber Dipl.-Ing.J.Schmidt-Evers**
**Steinsdorfstrasse 10 D-8000 München 22 (DE)**

## A method and apparatus for washing gases and/or recovering heat therefrom

The present invention relates to a method and apparatus for washing gases and/or recovering heat therefrom.

It is known to process gases for the purpose of washing them and/or recovering heat therefrom, by passing the gas through a treatment vessel from the bottom thereof and discharging said gas from the top thereof, and using for said process a liquid which is atomized or finely divided in the treatment vessel and collected and discharged from the bottom of the vessel. In this respect the treatment vessel has had the form of a spray tower, in which the liquid is finely divided or atomized by means of one or more spray nozzles. One disadvantage with this known method, however, is that the nozzles are quickly blocked by impurities or solid foreign matter in the liquid and/or gas.

It is also known to use rotary bodies mounted on a vertical centre shaft in place of spray nozzles to atomize the liquid in a treatment vessel of the type above. Thus, GB—A—11452 of 1912 discloses a number of rotary bodies mounted on a vertical centre shaft arranged in the treatment vessel with a space between the rotary bodies and the vessel wall. The rotary bodies may have the shape of inverted cones and inverted mushrooms in which case liquid is introduced into said rotary bodies and by means of the rotation is spread as one single atomized layer from the rim of each rotary body.

GB—A—325 300 discloses a method and apparatus for processing gases wherein the gas in a first step is processed with a liquid atomized by means of a rotary body mounted on a centre shaft in the treatment vessel and having the shape of an inverted truncated cone which is open at the truncated end and is provided with horizontal slots at its upper (wider) part. The truncated end of the cone dips into liquid collected in the lower portion of the treatment vessel to draw the liquid through centrifugal action into the cone and spray it laterally through the slots.

The disadvantages of the prior art are avoided with the method and apparatus according to the invention. Thus, the method and apparatus are insensitive to the presence of solid impurities in both the gas and the liquid and enable various kinds of waste water to be used to process said gas.

A further advantage afforded by the invention is the low pressure-drop obtained in the vessel.

According to the present invention there is provided a method of washing gases and/or recovering heat therefrom, in which gas to be processed is introduced into the bottom of a treatment vessel and removed from said vessel at the top thereof, and in which said gas is processed with a liquid which is finely divided in said vessel and collected and discharged from said vessel at the bottom thereof, and in which the liquid is introduced into one or more cup-shaped rotary bodies which are mounted on a vertical centre shaft arranged in the treatment vessel with a space between the rotary body or bodies and the vessel wall, which method is characterized in that each cup-shaped rotary body has an imperforate bottom and is provided in the side wall thereof with a plurality of openings having the form of slots extending vertically from the rim of the cup-shaped rotary body, such as to form during rotation of said body or bodies a series of curtains of liquid which flow freely from each of said body or bodies out towards the walls of said treatment vessel; in that each cup-shaped rotary body has an internal diameter which decreases from the rim to the bottom thereof; and in that the gas is lead past the rotary body or bodies on the outside thereof in the space between said body or bodies and the wall of said vessel, to flow substantially upwardly along the vessel wall and the outside of the rotary body or bodies and transversely relative to the direction of flow of the curtains of liquid issuing from the rotary body or bodies.

In accordance with a preferred embodiment of the method according to the invention, resulting in a low temperature of the outgoing gas, the gas after it has passed the curtains of liquid issuing from the rotary bodies, is cooled in an upper part of the treatment vessel with a cooling liquid, said upper part of said vessel being defined by a ring segment and a circular disc of porous material mounted on said vertical shaft above said ring segment, said cooling liquid being directed onto the upper side of said circular disc.

It may also be to advantage to cool the gas prior to its introduction into the treatment vessel by injecting liquid into the line through which the gas is charged to the treatment vessel.

The apparatus according to the invention, which apparatus includes a cylindrical treatment vessel having at the bottom thereof a gas inlet connected to a gas supply line and at the top thereof a gas outlet for processed gas; a vertical rotatable centre shaft which carries at least one cup-shaped rotary body and a liquid outlet at the bottom of the vessel, is characterized in that each cup-shaped rotary body has an imperforate bottom and is provided in the side wall thereof with a plurality of openings having the form of slots extending vertically from the rim of the cup-shaped rotary body; in that each cup-shaped rotary body has an internal diameter which decreases from the rim to the bottom thereof; in that respective means are arranged to cooperate with each of said rotary bodies for introducing liquid to at least one location within said at least one rotary body; in that the gas is arranged to flow past the at least one rotary body on the outside thereof in a space located between said at least one body and the wall of said vessel and substantially upwardly along said vessel wall and the outside of said rotary body; and in that the liquid is arranged to be thrown out freely as curtains through the slots in the side wall of said at least one rotary body, out towards the wall of said vessel.

By means of the internal diameter of said rotary body being greater at the upper edge thereof than at its bottom, solid impurities, such as fibres entrained with the liquid, do not collect within the body, but are moved up the inner wall of said body and out over the rim thereof.

From another aspect, the side wall of respective rotary bodies preferably has a substantially vertical outer surface.

In a preferred embodiment of the apparatus according to the invention a ring-shaped segment arranged on the inside of the treatment vessel defines, together with a circular disc of porous material mounted on said vertical shaft above said segment, an upper part of the treatment vessel; and a liquid inlet is directed against the upper side of said disc. Preferably, the upper surface of the ring-shaped segment slopes down towards the wall of the vessel. Further advantages are afforded by the provision of a liquid outlet in the wall of the vessel, immediately above said ring-shaped segment.

In accordance with a further embodiment, the gas-supply line is connected externally of the treatment vessel to a liquid-supply line.

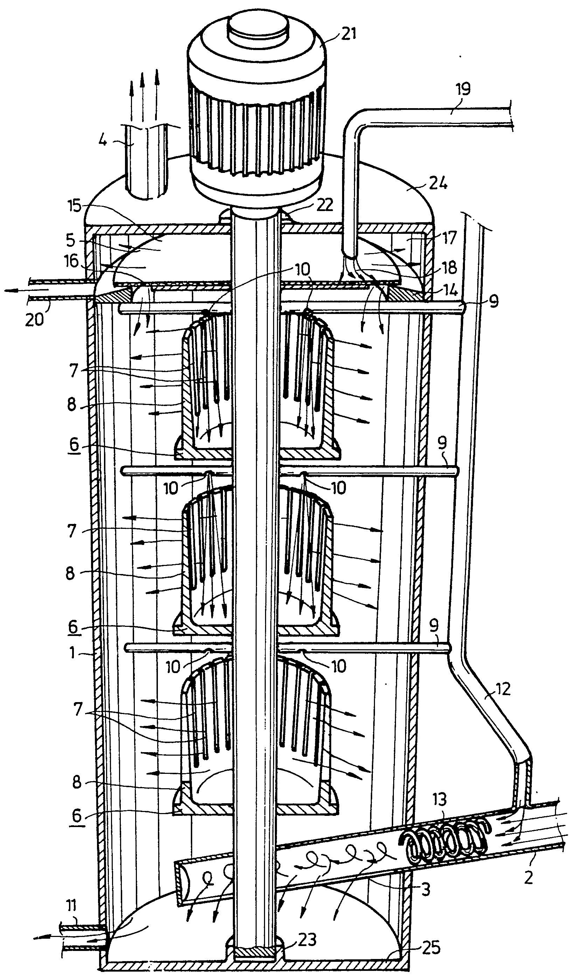

An examplary embodiment of the invention will now be described with reference to the accompanying drawing, the single Figure of which is a sectional view of an apparatus constructed in accordance with the invention.

The illustrated apparatus comprises a cylindrical treatment vessel 1 having arranged at the bottom thereof a gas-supply line 2 having extending therealong a gas inlet in the form of a slot 3, and at the top thereof a gas outlet 4 through which gas processed in the vessel 1 departs therefrom. The apparatus further includes a vertical, rotatable centre shaft 5 which carries a plurality of cup-shaped rotary bodies 6, each of which is provided in its side wall 8 with a plurality of slot-like openings 7; and a liquid-supply line 9 arranged for each rotary body and having two openings 10, which are so located that liquid is sprayed into respective rotary bodies 6. A liquid-outlet line 11 is arranged at the bottom of the vessel 1. Connected to the gas-supply line 2 externally of the vessel 1 is a liquid-supply line 12, which simultaneously serves as a main supply line for the lines 9. A coil 13 is arranged in the gas-supply line 2, to ensure that the liquid passing through the line 12 is mixed with the gas passing through said line 2.

In the illustrated embodiment, a ring-shaped segment 14 is mounted on the inside of the vessel 1. The upper surface of the segment 14 slopes down towards the wall of the vessel 1. The segment 14 defines an upper part of the vessel 1 together with a circular disc 15 of porous material, such as a textile material, mounted on the shaft 5 and supported by a further circular disc 16 of rigid material also mounted on the shaft 5. An outlet 18 from a liquid-supply line 19 is directed onto the porous disc 15. An outlet 20 for said liquid is provided adjacent the segment 14.

The shaft 5 is journalled on bearings 22, 23 in respective end walls of the vessel 1, and is driven by a motor 21.

The outer surfaces of the walls 8 of the bodies 6 are substantially vertical, while the inner surfaces slope inwardly, so that the bodies have a greater inner diameter at the top than at the bottom.

The gas to be processed and passing through the line 2 is cooled by means of liquid entering through the line 12 connected to the line 2. The mixture of gas and liquid flows into the vessel 1 through the slot 3. Subsequent to entering said vessel, the gas flows upwardly therethrough and during its passage is forced to pass through a plurality of curtains of liquid. These liquid curtains are generated by spraying or injecting liquid issuing from the lines 9 and openings 10 into the rotary bodies 6, and by rotating said bodies at such speeds that the liquid is thrown through the slots 7 in respective side walls 8, out towards the inside of the vessel 1. The gas then passes into the upper part 17 of the vessel 1, subsequent to having first passed a further curtain of liquid, said further liquid curtain being generated by causing liquid issuing from the line 19 and inlet 18 to be thrown out towards the inside of the vessel 1 by the disc 15.

The liquid introduced through the lines 12 and 9 collects at the bottom of the vessel and is discharged therefrom through the outlet 11. An advantage can be gained by returning a major part of the liquid leaving through outlet 11 to the lines 12 and 9, and to conduct the remainder of said liquid to a working-up station, where the amount of liquid delivered to said lines 12 and 9 can be made up by adding fresh, cold liquid. If the gas in line 2 is to be strongly cooled, separate lines are suitably used for the liquid-supply line connected to the gas-supply line 2, and the main supply line for the lines 9; in which case fresh, cold liquid is supplied to the connecting liquid-supply line, while liquid taken from the outlet 11 is returned to the lines 9.

The liquid supplied to the line 19 and the inlet 18 preferably has a low temperature, such that the temperature of the exiting gas is also low and only a small amount of condensation is formed in said gas. The inlet 18 is preferably directed onto a location on the disc 15 adjacent the shaft 5. Although a major part of the liquid entering the vessel through line 19 leaves through the outlet 20, a minor amount may spill over the edge of the segment 14 and run down to the lower part of the vessel 1, this minor amount depending upon the amount of liquid charged to the vessel through line 19 and the dimensions of the outlet 20. If desired, the outlet 20 may be omitted, so that all the liquid entering the vessel through line 19 runs down to the bottom of the vessel 1. Another possible variant is to provide means whereby the flow of liquid from the outlet 20 can be joined with the flow of liquid from the outlet 11.

Because the inner walls of the rotary bodies 6 slope inwardly, solid matter accompanying the liquid in the lines 9 is moved by centrifugal force up the side walls 8 of said bodies, and out over the rims thereof. The slot-like shape of the openings also enable fibrous contaminants to be carried away in this manner. Through the combination of a vertical outer surface of the walls 8, and vertical elongate slots 7, the liquid is thrown out through the openings in the form of sheets or layers having a considerable thickness, thereby ensuring good contact between liquid and gas.

The amount of liquid in the lines 9 should be such as to ensure that the liquid reaches as far up the wall 8 of respective bodies 6 as possible, so that the thickness of the ensuing sheets or layers of liquid is as great as possible.

The shaft 5 shall be rotated in a manner such that liquid in the bodies 6 is thrown out into the vessel 1. A peripheral speed of the rotary bodies 6 in the order of magnitude of 10—20 m/s should be sufficient in this respect. Very high speeds result in the formation of mists, and therewith lower efficiencies. The optional rotary speed of said bodies for given flows of liquid and gas can be established by simple tests.

The number of rotary bodies 6 and openings 7 in the side walls thereof can be varied, without departing from the scope of the invention. Although the efficiency of the apparatus will increase with increasing numbers of rotary bodies and openings, this increase will be only minimal when said number of rotary bodies and openings exceeds a certain value. Further, it is conceivable to provide a further cooling stage of the kind arranged in the upper part of the vessel in the illustrated embodiment, or by providing such a stage between two rotary bodies 6, or as an initial cooling stage.

Very high efficiencies have been obtained with a prototype apparatus constructed according to the invention, both with respect to purifying a gas and to removing heat therefrom.

## Claims

1. A method of washing gases and/or recovering heat therefrom, in which gas to be processed is introduced into the bottom of a treatment vessel and removed from said vessel at the top thereof, and in which said gas is processed with a liquid which is finely divided in said vessel and collected and discharged from said vessel at the bottom thereof, and in which the liquid is introduced into one or more cup-shaped rotary bodies which are mounted on a vertical centre shaft arranged in the treatment vessel with a space between the rotary body or bodies and the vessel wall, characterized in that each cup-shaped rotary body has an imperforate bottom and is provided in the side wall thereof with a plurality of openings having the form of slots extending vertically from the rim of the cup-shaped rotary body, such as to form during rotation of said body or bodies a series of curtains of liquid which flow freely from each of said body or bodies out towards the walls of said treatment vessel; in that each cup-shaped rotary body has an internal diameter which decreases from the rim to the bottom thereof; and in that the gas is lead past the rotary body or bodies on the outside thereof in the space between said body or bodies and the wall of said vessel, to flow substantially upwardly along the vessel wall and the outside of the rotary body or bodies and transversely relative to the direction of flow of the curtains of liquid issuing from the rotary body or bodies.

2. A method according to claim 1, characterized in that prior to being introduced into the treatment vessel, the gas is cooled by injecting liquid into the supply line through which said gas is passed to the treatment vessel.

3. A method according to claim 1 or claim 2, characterized in that after passing the curtains of water issuing from the rotary bodies, the gas is cooled with a cooling liquid in an upper part of the treatment vessel, said upper part being defined by a ring-shaped segment and a circular disc of porous material mounted on said shaft above said segment, and said liquid being directed against the upper side of said disc.

4. An apparatus for washing gases and/or recovering heat therefrom with a liquid which apparatus includes a cylindrical treatment vessel (1) having at the bottom thereof a gas inlet (3) connected to a gas supply line (2) and at the top thereof a gas outlet (4) for processed gas; a vertical rotatable centre shaft (5) which carries at least one cup-shaped rotary body (6) and a liquid outlet (11) at the bottom of the vessel, characterized in that each cup-shaped rotary body has an imperforate bottom and is provided in the side wall (8) thereof with a plurality of openings having the form of slots (7) extending vertically from the rim of the cup-shaped rotary body (6); in that each cup-shaped rotary body (6) has an internal diameter which decreases from the rim to the bottom thereof; in that respective means (9, 10) are arranged to cooperate with each of said rotary bodies (6) for introducing liquid to at least one location within said at least one rotary body (6); in that the gas is arranged to flow past the at least one rotary body (6) on the outside thereof in a space located between said at least one body (6) and the wall of said vessel (1) and substantially upwardly along said vessel wall and the outside of said rotary body (6); and in that the liquid is arranged to be thrown out freely as curtains through the slots (7) in the side wall (8) of said at least one rotary body (6), out, towards the wall of said vessel (1).

5. An apparatus according to claim 4, characterized in that the gas-supply line (2) has a liquid-supply line (12) connected thereto externally of the vessel (1).

6. An apparatus according to claim 4 or claim 5, characterized in that the outer surface of the side wall (8) of each rotary body (6) is substantially vertical.

7. An apparatus according to one or more of claims 4—6, characterized in that said vessel (1) has an upper part (17) defined by a ring-shaped segment (14), arranged on the inside of said vessel, and a circular disc (15) of porous material mounted on the shaft (5) above said ringshaped segment (14); and wherein a liquid inlet (18) is directed onto the upper surface of the disc (15).

8. An apparatus according to claim 7, characterized in that the ring-shaped segment (14) slopes downwardly towards the wall of the vessel (1).

9. An apparatus according to claim 8, characterized in that a liquid outlet (20) is arranged in the wall of the vessel (1), immediately above the ring-shaped segment (14).

## Patentansprüche

1. Verfahren zum Waschen von Gasen und/oder Wiedergewinnen von Wärme aus den Gasen, bei welchem zu behandelndes Gas in den Boden eines Behandlungsgefäßes eingeleitet und aus dem Gefäß an seinem Kopf entfernt wird, und bei welchem das Gas mit einer Flüssigkeit behandelt wird, welche in dem Gefäß fein verteilt ist und gesammelt und aus dem Gefäß an seinem Boden abgegeben wird, und bei welchem die Flüssigkeit in einen oder mehrere becherförmige Drehkörper eingeleitet wird, welche an einer vertikalen Mittelwelle angebracht sind und in dem Gefäß mit einem Zwischenraum zwischen dem Drehkörper oder den Drehkörpern und der Gefäßwand angeordnet sind, dadurch gekennzeichnet, daß jeder becherförmige Drehkörper einen nichtperforierten Boden aufweist und in seiner Seitenwand mit mehreren Öffnungen versehen ist, welche die Form von Schlitzen haben, die sich vertikal von dem Rand des becherförmigen Drehkörpers erstrecken, um so bei Drehung des Drehkörpers oder der Drehkörper eine Reihe von Flüssigkeitsvorhängen zu bilden, welche von jedem Drehkörper frei zu den Wänden des Gefäßes hin herausströmen, daß jeder becherförmige Drehkörper einen inneren Durchmesser aufweist, welcher von seinem Rand zu seinem Boden hin abnimmt, und daß das Gas an der Außenseite des Drehkörpers oder der Drehkörper vorbei in dem Raum zwischen dem Drehkörper oder den Drehkörpern und der Gefäßwand geführt wird, um entlang der Gefäßwand und der Außenseite des Drehkörpers oder der Drehkörper und quer zur Strömungsrichtung der von diesem oder diesen ausströmenden Flüssigkeitsvorhänge im wesentlichen nach oben zu strömen.

2. Verfahren nach Anspruch 1, dadurch gekennzeichnet, daß das Gas vor dem Einleiten in das Behandlungsgefäß gekühlt wird durch Einspritzen von Flüssigkeit in die Zufuhrleitung, durch welche das Gas dem Behandlungsgefäß zugeleitet wird.

3. Verfahren nach Anspruch 1 oder 2, dadurch gekennzeichnet, daß das Gas nach em Passieren der von den Drehkörpern ausströmenden Wasservorhänge mit einer Kühlflüssigkeit in einem oberen Teil des Behandlungsgefäßes gekühlt wird, wobei der obere Teil definiert wird durch ein ringförmiges Segment und eine Kreisscheibe aus porösem Material, die an der Welle oberhalb des Segments angebracht ist, und wobei die Flüssigkeit gegen die obere Seite der Scheibe gerichtet wird.

4. Vorrichtung zum Waschen von Gasen und/oder Wiedergewinnen von Wärme aus den Gasen mittels einer Flüssigkeit, welche Vorrichtung ein zylinderförmiges Behandlungsgefäß (1) umfaßt, das an seinem Boden einen Gaseinlaß (3) aufweist, der an eine Gaszufuhrleitung (2) angeschlossen ist, und an seinem Kopf einen Gasauslaß (4) für behandeltes Gas aufweist, ferner eine vertikale drehbare Mittelwelle (5), welche wenigstens eine becherförmigen Drehkörper (6) trägt, sowie einen Flüssigkeitsauslaß (11) am Boden des Gefäßes, dadurch gekennzeichnet, daß jeder becherförmige Drehkörper einen nichtperforierten Boden aufweist und in seiner Seitenwand mit mehreren Öffnungen versehen ist, welche die Form von Schlitzen (7) haben, die sich vertikal von dem Rand des becherförmigen Drehkörpers (6) erstrecken, daß jeder becherförmige Drehkörper (6) einen Innendurchmesser aufweist, welcher von seinem Rand zu seinem Boden abnimmt, daß entsprechende Mittel (9, 10) so ausgelegt sind, daß sie mit jedem der Drehkörper (6) zusammenarbeiten, um Flüssigkeit wenigstens einer Stelle innerhalb jedes Drehkörpers (6) zuzuführen, daß die Anordnung so getroffen ist, daß das Gas an der Außenseite jedes Drehkörpers (6) vorbei in einem Raum, der zwischen jedem Drehkörper (6) und der Wand des Gefäßes (1) gelegen ist, und im wesentlichen nach oben entlang der Gefäßwand und der Außenseite des Drehkörpers (6) strömt, und daß die Anordnung so getroffen ist, daß die Flüssigkeit frei als Vorhänge durch die Schlitze (7) in der Seitenwand (8) jedes Drehkörpers (6) hindurch zu der Wand des Gefäßes (1) hin geschleudert wird.

5. Vorrichtung nach Anspruch 4, dadurch gekennzeichnet, daß an die Gaszufuhrleitung (2) eine Flüssigkeitszufuhrleitung (12) außerhalb des Gefäßes (1) angeschlossen ist.

6. Vorrichtung nach Anspruch 4 oder 5, dadurch gekennzeichnet, daß die Aussenflächen der Seitenwand (8) jedes Drehkörpers (6) im wesentlichen vertikal ist.

7. Vorrichtung nach einem oder mehreren der Ansprüche 4 bis 6, dadurch gekennzeichnet, daß das Gefäß (1) einen oberen Teil (17) aufweist, der durch ein ringförmiges Segment (14) definiert ist, welches an der Innenseite des Gefäßes angeordnet ist, sowie eine Kreisscheibe (15) aus porösem Material, die an der Welle (5) oberhalb des ringförmigen Elements (14) angebracht ist, und daß ein Flüssigkeitseinlaß (18) auf die obere Fläche der Scheibe (15) gerichtet ist.

8. Vorrichtung nach Anspruch 7, dadurch gekennzeichnet, daß das ringförmige Segment (14) zu der Wand des Gefäßes (1) hin abwärts geneigt ist.

9. Vorrichtung nach Anspruch 8, dadurch gekennzeichnet, daß ein Flüssigkeitsauslaß (20) in der Wand des Gefäßes (1) unmittelbar oberhalb des ringförmigen Segments (14) angeordnet ist.

**Revendications**

1. Un procédé pour laver des gaz et/ou pour en récupérer de la chaleur, au cours duquel du gaz à traiter est introduit dans le fond d'un récipient à traitement, et soutiré en haut de ce récipient, et au cours duquel le gaz est traité avec un liquide qui est finement divisé dans le récipient, puis recueilli et évacué par le fond du récipient, au cours duquel le liquide est introduit dans un ou plusieurs corps de rotation en forme de coupe qui sont montés sur un axe central vertical dans le récipient à traitement à distance du ou des corps de rotation et de la paroi, caractérisé en ce que chaque corps de rotation en forme de coupe est muni d'un fond non-perforé et d'une paroi parsemée d'une multitude d'orifices en forme de rainures qui s'étendent verticalement à partir du bord du corps de rotation en forme de coupe, de façon à ce qu'elles forment, au cours de la rotation du (des) corps, une série de rideaux de liquide qui s'écoulent librement à partir du (des) corps vers les parois du récipient à traitement; en ce que chaque corps de rotation a un diamètre intérieur qui va en décroissant du bord au fond; en ce que le gaz est conduit le long du (des) corps de rotation à l'extérieur dans l'espace entre le(s) corps et la paroi du récipient, pour s'écouler principalement en amont le long de la paroi du récipient et au dehors du (des) corps de rotation et en travers par rapport à la direction d'écoulement des rideaux de liquide qui s'écoulent du (des) corps de rotation.

2. Un procédé selon la revendication 1, caractérisé en ce que, avant d'être introduit dans le récipient à traitement, le gaz est d'abord refroidi en injectant du liquide dans le canal d'alimentation par lequel le gaz doit passer pour arriver dans le récipient à traitement.

3. Un procédé selon la revendication 1, caractérisé en ce que, après avoir passé les rideaux d'eau s'écoulant des corps de rotation, le gaz est refroidi au moyen d'un liquide refroidissant dans la partie supérieure du récipient à traitement, la partie supérieure étant définie par un segment annulaire et un disque circulaire en matière poreuse montée sur l'arbre au-dessus de ce segment, le liquide étant dirigé contre la surface supérieure de ce disque.

4. Un appareil pour laver des gaz et/ou pour en récupérer de la chaleur avec un liquide, composé d'un récipient à traitement cylindrique (1) dans le fond duquel se trouve un orifice d'entrée (3) pour le gaz étant raccordé à un canal d'alimentation (2) pour le gaz, et en haut duquel se trouve un orifice de sortie (4) pour le gaz traité; d'un arbre central vertical et rotatif (5) qui porte au moins un corps de rotation en forme de coupe (6) et un orifice de sortie (11) pour le liquide au fond du récipient, caractérisé en ce que chaque corps de rotation en forme de coupe (6) a un fond non-perforé et sa paroi latérale (8) est pourvue d'une multitude d'orifices ayant la forme de rainures (7) qui s'étendent verticalement à partir du bord du corps de rotation en forme de coupe (6); en ce que chaque corps (6) en forme de coupe a un diamètre intérieur qui va en décroissant vers le bord jusqu'au fond de celui-ci; en ce que des moyens (9, 10) sont disposés de façon à ce que chacun fonctionne en relation avec chacun des corps de rotation (6) introduire du liquide au moins dans un endroit d'au moins un corps de rotation (6); en ce que le gaz est distribué de façon à s'écouler le long d'au moins un corps de rotation (6) à l'extérieur de celui-ci dans un espace entre au moins un corps (6) et la paroi du récipient (1) et surtout vers le haut le long de la paroi du récipient et à l'extérieur du corps (6); et en ce que le liquide est distribué de façon à être librement jeté en tant que rideaux à travers les rainures (7) dans la paroi latérale (8) d'au moins un corps de rotation (6) vers la paroi du récipient (1).

5. Un appareil selon la revendication 4, caractérisé en ce que le canal d'alimentation en gaz (2) a un canal d'alimentation en liquide (12) raccordé à celui-ci à l'extérieur du récipient (1).

6. Un appareil selon la revendication 4 ou 5, caractérisé en ce que la surface extérieure de la paroi latérale (8) de chaque corps de rotation (6) est, en principe, verticale.

7. Un appareil selon une ou plusieurs revendications 4—6, caractérisé en ce que le récipient (1) a une partie supérieure (17) définie par un segment (14) annulaire, monté à l'intérieure du récipient, et un disque circulaire (15) en matière poreuse monté sur l'arbre (5) au-dessus du segment annulaire (14), un orifice d'entrée (18) pour le liquide étant dirigé sur la surface supérieure du disque (15).

11

**0013961**

12

8. Un appareil selon la revendication 7, caractérisé en ce que le segment annulaire (14) s'incline vers le bas de la paroi du récipient (1).

9. Un appareil selon la revendication 8, caractérisé en ce qu'une sortie (20) pour le liquide se trouve dans la paroi du récipient (1), directement au-dessus du segment annulaire (14).